(19) Europäisches Patentamt / European Patent Office / Office européen des brevets

(11) EP 2 778 514 A1

(12) EUROPEAN PATENT APPLICATION

(43) Date of publication:
17.09.2014 Bulletin 2014/38

(51) Int Cl.:
F21V 3/00 (2006.01)  F21S 8/04 (2006.01)
F21V 9/02 (2006.01)  F21W 131/40 (2006.01)
F21W 131/402 (2006.01)  F21Y 113/02 (2006.01)

(21) Application number: 13181814.8

(22) Date of filing: 27.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.03.2013  JP 2013048482

(71) Applicant: Kabushiki Kaisha Toshiba
Tokyo 105-8001 (JP)

(72) Inventors:
• Higashi, Hirokuni
Tokyo, 105-8001 (JP)
• Koga, Shouta
Tokyo, 105-8001 (JP)
• Ishiwata, Tomoko
Tokyo, 105-8001 (JP)

(74) Representative: HOFFMANN EITLE
Patent- und Rechtsanwälte
Arabellastrasse 4
81925 München (DE)

(54) **Luminaire**

(57) According to an embodiment, a luminaire (1; 2; 3; 4; 5; 5'; 100) includes a plurality of light source units (10, 11; 22, 23A, 23B; 32, 33A, 33B; 42, 43; 52; 101, 102) having mutually different characteristics; and a plurality of diffusing units (12, 13; 24, 25A, 25B; 34, 35A, 35B; 44, 45; 53, 53'; 103, 104) configured to diffuse light emitted from the light source units (10, 11; 22, 23A, 23B; 32, 33A, 33B; 42, 43; 52; 101, 102) and have mutually different characteristics.

FIG.2

**Description**

FIELD

Embodiments described herein relate generally to a luminaire.

BACKGROUND

In the case of reducing the glare of a luminaire, generally a diffusing material having a high degree of diffusion is used in such a way that the light-emitting portion of the luminaire (hereinafter, referred to as "luminous part") becomes a light-emitting face having uniform in-plane luminance. Alternatively, it is also possible to configure the light-emitting face by arranging a plurality of light sources at closely-spaced and equal intervals. By ensuring uniformity in the luminance of the luminous part, it becomes possible to reduce the glare that is felt at the time of directly looking at the luminaire.

However, in the case when there is uniformity in the luminance of the luminous part, although it becomes possible to reduce the glare, it leads to a drop in the luminous efficiency (i.e., the ratio of the total luminous flux of the luminaire to the total luminous flux of the light sources) thereby resulting in a decline in the energy-saving capacity of the luminaire. Moreover, in the configuration of arranging a plurality of light sources at closely-spaced and equal intervals, an enormous number of light sources is used thereby resulting in an increase in the manufacturing cost of the luminaire.

BRIEF DESCRIPTION OF THE DRAWINGS

FIG. 1 is a diagram for explaining definition of terms;
FIG. 2 is a diagram that conceptually illustrates a configuration of a luminaire according to a first embodiment;
FIG. 3 is a diagram illustrating an environment in which the luminaire according to the first embodiment is installed;
FIG. 4 is a diagram for explaining the characteristics of the luminaire according to the first embodiment;
FIG. 5 is a diagram for explaining the characteristics of a luminaire according to the conventional technology;
FIG. 6 is a perspective view that schematically illustrates a luminaire according to a second embodiment;
FIG. 7 is a functional block diagram for explaining the functions of the luminaire according to the second embodiment;
FIG. 8 is a perspective diagram that schematically illustrates a luminaire according to a third embodiment;
FIG. 9 is a functional block diagram for explaining the functions of the luminaire according to the third embodiment;
FIG. 10 is a diagram for schematically explaining the distribution of luminous intensity of a light source;
FIG. 11 is a diagram illustrating an environment in which the luminaire according to the third embodiment is installed;
FIG. 12 is a diagram for explaining the characteristics of the luminaire according to the third embodiment;
FIG. 13 is a perspective view that schematically illustrates a luminaire according to a fourth embodiment;
FIG. 14 is a perspective view that schematically illustrates a luminaire according to a fifth embodiment;
FIG. 15A is a diagram illustrating a configuration example of light source units in the luminaire according to the fifth embodiment;
FIG. 15B is a diagram illustrating a configuration example of the diffuser plate in the luminaire according to the fifth embodiment;
FIG. 16 is a perspective view that schematically illustrates a luminaire according to a modification example of the fifth embodiment;
FIG. 17 is a diagram illustrating a configuration example of light source units in the luminaire according to the modification example of the fifth embodiment;
FIG. 17B is a diagram illustrating a configuration example of the diffuser plate in the luminaire according to the modification example of the fifth embodiment; and
FIG. 18 is a diagram for explaining another example of the definition of maximum luminance that can be adopted in the embodiments and the modification example.

DETAILED DESCRIPTION

According to an embodiment, a luminaire includes a plurality of light source units having mutually different characteristics; and a plurality of diffusing units configured to diffuse light emitted from the light source units and have mutually different characteristics.

Definition of terms

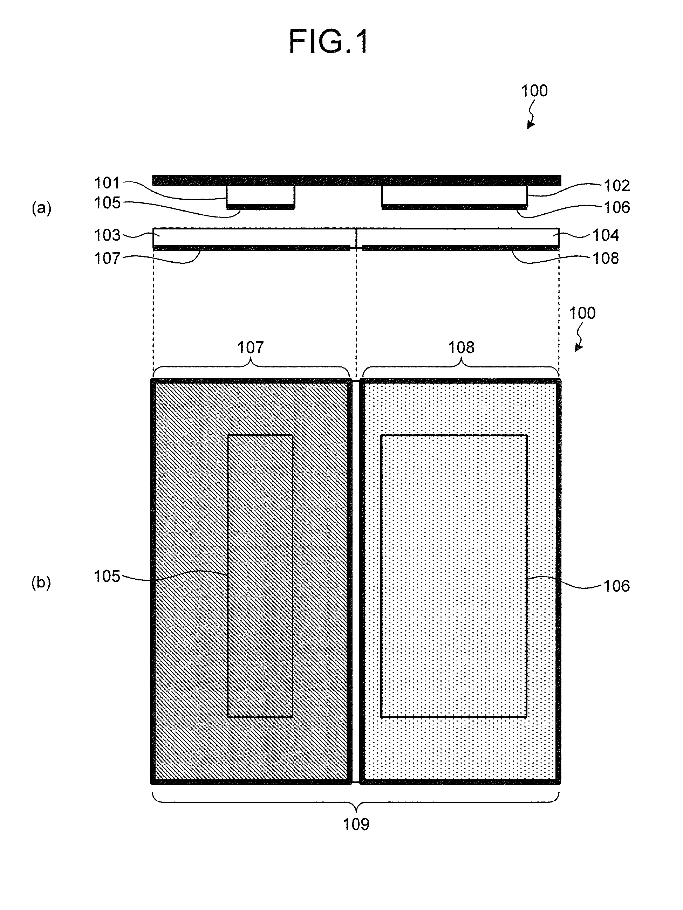

Prior to giving the explanation of embodiments, the definition of terms is given with reference to FIG. 1. In FIG. 1, section (a) is a cross-sectional view of a luminaire 100, and section (b) is a front view of the luminaire 100. In the following explanation, the face from which a luminaire emits most of the light is called the front face of that luminaire. For example, when a luminaire is installed to the ceiling, then the face of the luminaire opposite to the floor is referred to as the front face.

With reference to FIG. 1, the luminaire 100 includes two light source units 101 and 102 each of which has light sources, as well as includes diffuser plates 103 and 104. The diffuser plate 103 diffuses the light emitted from the light source unit 101 so that the diffused light is thrown out to the outside of the luminaire 100. Similarly, the diffuser plate 104 diffuses the light emitted from the light source unit 102 so that the diffused light is thrown out to the outside of the luminaire 100.

With reference to FIG. 1; light-emitting portions, light-emitting faces, and a luminous part are defined as the portions through which the light is emitted from the luminaire 100. A light-emitting portion is the portion from which the light is thrown out when a light source unit is placed in a dark place. In the example illustrated in FIG. 1, the surfaces of the light source units 101 and 102 are treated as light-emitting portions 105 and 106, respectively.

A light-emitting face is the portion from which the light is thrown out when one type of the light source unit and one type of the diffusing unit are placed in a dark place. In the example illustrated in FIG. 1, for example, regarding the light source unit 101 combined with the diffuser plate 103; that face of the diffuser plate 103 from which the light is thrown out and which is on the opposite side to the side of the light-emitting portion 105 is treated as a light-emitting face 107. In an identical manner, regarding the combination of the light source unit 102 and the diffuser plate 104; that face of the diffuser plate 104 which is on the opposite side to the side of the light-emitting portion 106 is treated as a light-emitting face 108.

A luminous part is the portion from which the light is thrown out when a luminaire is placed in a dark place. In the example illustrated in FIG. 1, a luminous part 109 includes the light-emitting faces 107 and 108. The light thrown out from a luminous part contains direct light that is the light emitted from light source units; contains diffused light that is the light emitted from the light source units and thrown out through diffusing units installed in combination with the light source units; and reflected light that is the light emitted from the light source units and reflected from a reflective material (not illustrated) provided in the light source units. However, that is not the only possible case. That is, as long as the light thrown out from a luminous part can contain at least one of the direct light, the diffused light, and the reflected light; it serves the purpose.

First embodiment

Given below is the explanation of a luminaire according to a first embodiment. Herein, the luminaire according to the first embodiment includes light source units of two or more types, each of which includes one or more light sources and has different characteristics such as at least the maximum luminance; and includes diffusing units of two or more types, each of which diffuses the light emitted from a light source unit and has different characteristics such as at least the degree of diffusion.

In the luminaire according to the first embodiment, in the luminous part, a light-emitting face that is seen on a frequent basis in foveal vision and a light-emitting face that is seen not on a frequent basis but on rare occasions in foveal vision are configured by combining different types of light source units and diffusing units. With that, a luminaire having a reduced glare and having a high usage efficiency of the light emitted from the light sources can be provided at a low manufacturing cost.

More particularly, the luminaire according to the first embodiment includes a first light source unit and includes a second light source unit that has a lower maximum luminance as compared to the maximum luminance of the first light source unit. Moreover, the luminaire according to the first embodiment includes a first diffusing unit and includes a second diffusing unit that has a smaller degree of diffusion as compared to the degree of diffusion of the first diffusing unit. In the luminaire according to the first embodiment, the first light source unit and the first diffusing unit are combined to configure a first lighting unit, and the second light source unit and the second diffusing unit are combined to configure a second lighting unit.

Herein, the maximum luminance points to the maximum value of luminance distribution in the light-emitting face of a light source unit. Moreover, the degree of diffusion is expressed as the haze or the degree of dispersion. The haze gives an indication of film transparency and represents turbidity. The haze can be obtained from the ratio of the diffused transmission light to the total transmission light. The degree of dispersion indicates an angle at which, when the center of the direction of emission of light is considered to be 0°, the luminance becomes 50% with respect to the luminance at 0°. Thus, greater the degree of dispersion, more superior is the diffuseness.

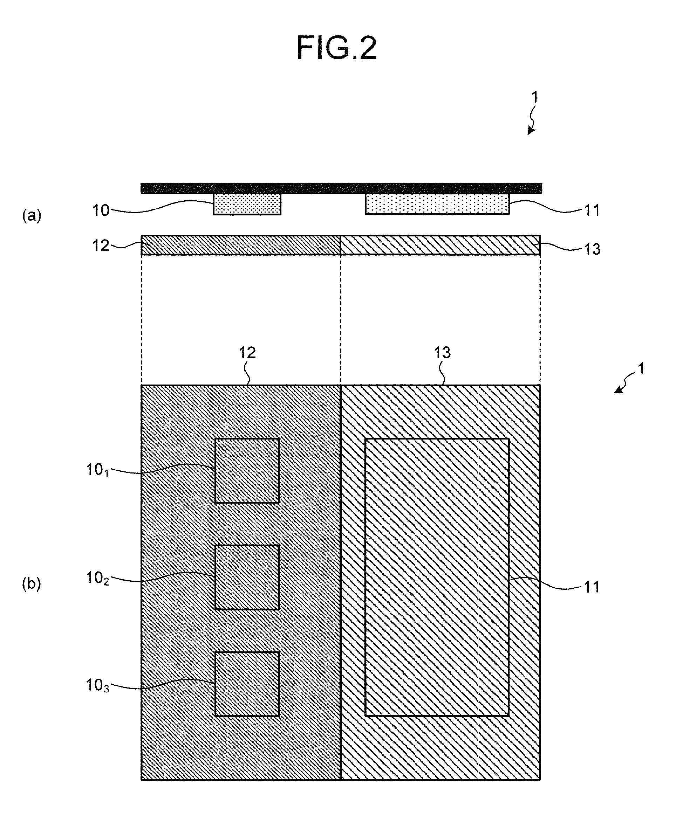

FIG. 2 is a diagram that conceptually illustrates a configuration of the luminaire according to the first embodiment.

With reference to FIG. 2, a luminaire 1 includes two types of light source units, namely, a first light source unit 10 and a second light source unit 11 that have mutually different characteristics. The first light source unit 10 as well as the second light source unit 11 includes one or more light sources. The first light source unit 10 has a higher maximum luminance as compared to the maximum luminance of the second light source unit 11, and has the light-emitting face of smaller area as compared to the area of the light-emitting face of the second light source unit 11. Moreover, in the example illustrated in FIG. 2, in the luminaire 1, the first light source unit 10 includes a plurality of first light source units $10_1$, $10_2$, and $10_3$. In this example, the sum of areas of the light-emitting faces of the first light source units $10_1$, $10_2$, and $10_3$ is smaller than the area of the light-emitting face of the second light source unit 11.

Moreover, the luminaire 1 includes a first diffuser 12 and a second diffuser 13 that have mutually different characteristics. Herein, the first diffuser 12 is set to have a greater degree of diffusion as compared to the degree of diffusion of the second diffuser 13.

In the luminaire 1, the first light source unit 10 and the first diffuser 12 are combined to configure a first lighting unit. That is, in the first lighting unit, the light emitted from the first light source unit 10 is thrown out to the outside of the luminaire 1 through the first diffuser 12. Similarly, in the luminaire 1, the second light source unit 11 and the second diffuser 13 are combined to configure a second lighting unit. That is, in the second lighting unit, the light emitted from the second light source unit 11 is thrown out to the outside of the luminaire 1 through the second diffuser 13.

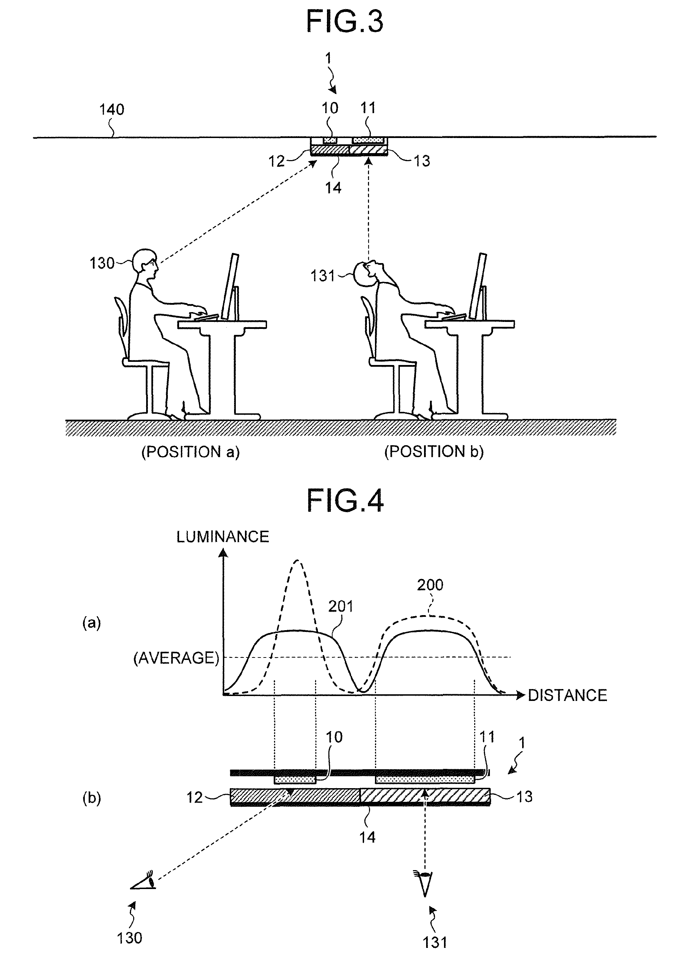

Explained below with reference to FIGS. 3 and 4 is the effect achieved with the use of the luminaire 1 according to the first embodiment. In the explanation with reference to FIGS. 3 and 4, the constituent elements identical to the constituent elements illustrated in FIG. 2 are referred to by the same reference numerals, and the detailed explanation thereof is not repeated.

In FIG. 3 is illustrated an environment in which the luminaire 1 according to the first embodiment is installed. Herein, the luminaire 1 is installed to a ceiling 140 in such a way that a luminous part 14 of the luminaire 1 is facing the floor. Moreover, it is assumed that a worker 131 is present at a position b that is close to the position directly below the luminaire 1, while it is assumed that a worker 130 is present at a position a that is distant from the position b. More particularly, with respect to the luminaire 1 in which the first lighting unit and the second lighting unit are configured adjacent to each other, the position a is away in the direction from the first lighting unit.

For the anteriorly-facing worker 130, the luminous part 14 comes in sight. Thus, there is a possibility that the luminous part 14 is seen on a frequent basis in foveal vision. In contrast, since the worker 131 is present close to the position directly below the luminaire 1, that is, the luminous part 14; the luminous part 14 is not seen on a frequent basis but may be seen on rare occasions in foveal vision.

FIG. 4 is a diagram for explaining the characteristics of the luminaire 1 according to the first embodiment. In FIG. 4, section (a) illustrates an example of the luminance distribution of the luminaire 1, while section (b) illustrates a cross-sectional view of the luminaire 1 corresponding to section (a). An example of the luminance distribution resulting from the light-emitting portions of the light source units 10 and 11 is illustrated by a curved line 200 in section (a) in FIG. 4. The luminance distribution resulting from the light-emitting portion of the first light source unit 10 is smaller in width and has a higher peak. In contrast, the luminance distribution resulting from the light-emitting portion of the second light source unit 11 is larger in width but has a lower peak than the peak of the first light source unit 10.

An example of the luminance distribution in the surfaces, that is, the light-emitting faces of the first diffuser 12 and the second diffuser 13 or the luminance distribution in the luminous part 14 is illustrated by a curved line 201 in section (a) in FIG. 4. Herein, since the second light source unit 11 having a low maximum luminance and a large area of the light-emitting portion is combined with the second diffuser 13 having a low degree of diffusion, the luminance distribution of the light emitted from the second light source unit 11 is substantially identical to the configuration in which the second diffuser 13 is not disposed. On the other hand, since the first light source unit 10 having a high maximum luminance and a small area of the light-emitting portion is combined with the first diffuser 12 having a high degree of diffusion, the luminance distribution of the light emitted from the first light source unit 10 has a suppressed peak and a dispersed luminance thereby making the luminance distribution smooth. Moreover, because of the first diffuser 12 having a high degree of diffusion and the second diffuser 13 having a low degree of diffusion, the luminance distribution resulting from the light-emitting faces of the light source units 10 and 11 is kept at the substantially equal level.

Thus, even in the case when, from the side of the first light source unit 10 that has a high degree of luminance, the worker 130 looks at the luminous part 14 of the luminaire 1 in foveal vision; the glare felt by the worker 130 is reduced because the light emitted from the first light source unit 10 is diffused at the first diffuser 12, which has a high degree of diffusion, so that the luminance peak of the light is kept low.

Moreover, for example, even in the case when the worker 131 looks upward at the luminous part 14 of the luminaire 1 on rare occasions, the light that directly enters foveal vision is the light that is emitted from the second light source unit 11 having a low degree of luminance and that is diffused at the second diffuser 13. Hence, the glare felt by the worker 131 is reduced. Moreover, in case the light emitted from the first light source unit 10 having a high degree of luminance enters foveal vision of the worker 131, the light emitted from the first light source unit 10 is diffused at the first diffuser 12, which has a high degree of diffusion, so that the luminance peak of the light is kept low. Hence, the glare felt by the worker 131 is reduced.

Moreover, since the second light source unit 11 having a low degree of luminance is combined with the second diffuser 13 having a low degree of diffusion, a high luminous efficiency is achieved for the light emitted from the second light source unit 11. Herein, the luminous efficiency points to the ratio of the total luminous flux thrown out from the luminous part with respect to the total luminous flus emitted from the light sources. Furthermore, the luminance distribution in the luminous part is adjusted by combining different types of light sources with different types of diffusers. As a result, reduction in the glare can be achieved at a low manufacturing cost.

Given below is further explanation of the effect of the first embodiment. In order to reduce the glare felt from a luminaire, generally a diffusing material having a high degree of diffusion is used in such a way that the luminous part of the luminaire has uniform luminance distribution. However, in this method, as described already, the luminous efficiency of the lighting undergoes a decline. Alternatively, in the method in which a plurality of light sources is arranged at closely-spaced and equal intervals so as to ensure uniformity in the luminance distribution in the luminous part, a large number of light sources are required. That results in an increase in the manufacturing cost of the luminaire.

Herein, uniformity in the luminance distribution in the luminous part is ensured with the aim of reducing the glare that is felt when one directly looks at the luminous part. However, in practice, since a luminaire is installed to the ceiling inside a room, it is believed that the luminous part is not usually seen by the workers. Thus, it is not essential to have uniform luminance distribution in the luminous part. Moreover, the visual properties of people are such that details in foveal vision are observable but details toward peripheral vision are not easily visible. Hence, while considering a luminous part that matches with the visual properties of people, the luminance distribution neither needs be uniform nor needs to be evenly non-uniform.

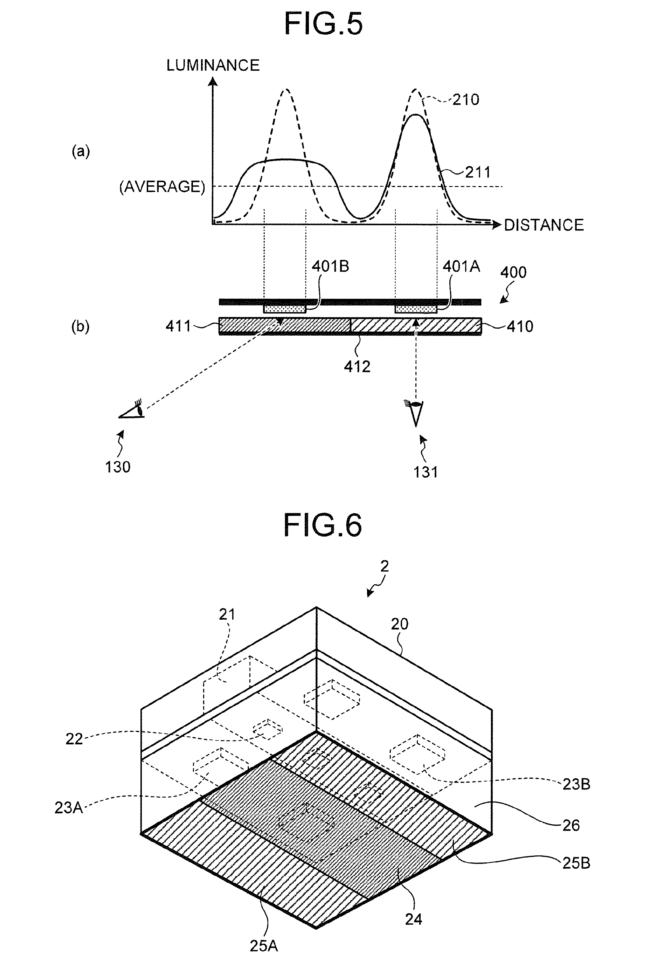

In Japanese Patent Application Laid-open No. 2009-048955, a luminaire is disclosed in which luminous efficiency as well as reduction in the glare is achieved using a diffusing material having different degrees of diffusion in part. FIG. 5 is a diagram for explaining the characteristics of a luminaire 400 according to the conventional technology. In the luminaire 400; with respect to a light source 401, a diffusing unit 410 having a low degree of diffusion (i.e., having high luminous efficiency) is positioned in the portion that does not easily come in sight, while a diffusing unit 411 having a high degree of diffusion (i.e., having low luminous efficiency) is positioned in the portion that easily comes in sight. With that, luminous efficiency as well as reduction in the glare is achieved. Meanwhile, in FIG. 5, the light source 401 is illustrated to be divided into a light source 401A that is on the side of the diffusing unit 410, and a light source 401B that is on the side of the diffusing unit 411.

In FIG. 5, section (a) illustrates an example of the luminance distribution in a luminous part 412 of the luminaire 400, while section (b) illustrates a cross-sectional view of the luminaire 400 corresponding to section (a). An example of the luminance distribution resulting from the light-emitting portions of the light sources 401A and 401B is illustrated by a curved line 210 in section (a) in FIG. 5. Herein, since the light sources 401A and 401B represent the same light source, the luminance distribution resulting therefrom is equally small in width and has an equally high peak.

An example of the luminance distribution in the surfaces, that is, the light-emitting faces of the diffusing units 410 and 411 is illustrated by a curved line 211 in section (a) in FIG. 5. Herein, on the side of the diffusing unit 410 having a low degree of diffusion (i.e., on the right-hand side in FIG. 5), the luminance distribution of the light emitting from the light source 401A is substantially identical to the luminance distribution in the case in which the diffusing unit 410 is not disposed. On the other hand, on the side of the diffusing unit 411 having a high degree of diffusion (i.e., on the left-hand side in FIG. 5), the light source 401B has a suppressed peak and a dispersed luminance thereby making the luminance distribution smooth.

Thus, if, from the side of the diffusing unit 411, the worker 130 looks at the luminous part 412 of the luminaire 400 in foveal vision; the glare that is felt by the worker 130 is reduced because the light emitted from the light source 401B is diffused at the diffusing unit 411 so that the luminance peak of the light is kept low.

On the other hand, when the worker 131 looks upward at the luminous part 412 of the luminaire 400 on rare occasions, the light that is emitted from the light source 401A passes through the diffusing unit 410 having a low degree of diffusion and enters foveal vision of the worker 131 at a high peak of luminance distribution. As a result, the worker 131 feels the glare of the light. Although it is believed that looking directly at the luminous part 412 of the luminaire 400, which is installed to the ceiling, is not done on a frequent basis; it is not an infrequent occurrence to look upward at the ceiling during a break time or by chance. Thus, it cannot be said that the conventional technology enables achieving reduction in the glare.

In contrast, as described above in the first embodiment, the first light source unit 10 having a high degree of luminance and a small area is combined with the first diffuser 12 having a high degree of diffusion, while the second light source unit 11 having a low degree of luminance and a large area is combined with the second diffuser 13 having a low degree of diffusion. As a result, reduction in the glare can be achieved regardless of the line of sight.

Meanwhile, in the explanation given above, the maximum luminance of the light-emitting face of the second lighting unit is set to be substantially equal to the maximum luminance of the light-emitting face of the first lighting unit. However, that is not the only possible case. Alternatively, for example, the maximum luminance of the light-emitting face of the second lighting unit can be set to be higher than the maximum luminance of the light-emitting face of the first lighting unit; or the maximum luminance of the light-emitting face of the first lighting unit can be set to be higher than the maximum luminance of the light-emitting faces of the second lighting unit.

Second embodiment

Given below is the explanation of a second embodiment. In the second embodiment is explained a more concrete example of the luminaire 1 according to the first embodiment. FIG. 6 is a perspective view that schematically illustrates a luminaire 2 according to the second embodiment. As illustrated in FIG. 6, the luminaire 2 according to the second embodiment includes a control unit 21, a first light source unit 22, second light source units 23A and 23B, a first diffusing unit 24, second diffusing units 25A and 25B, and a reflector unit 26. All these constituent elements are housed in a housing 20. In the example illustrated in FIG. 6, each of the first light source unit 22, the second light source unit 23A, and the second light source unit 23B includes a plurality of light source units.

Moreover, each of the first light source unit 22, the second light source unit 23A, and the second light source unit 23B includes one or more light sources, and has the output thereof controlled by the control unit 21. The first diffusing unit 24 diffuses the light emitted from the first light source unit 22. The second diffusing unit 25A diffuses the light emitted from the second light source unit 23A. The second diffusing unit 25B diffuses the light emitted from the second light source unit 23B. The reflector unit 26 reflects the light emitted from each of the first light source unit 22, the second light source unit 23A, and the second light source unit 23B in a corresponding predetermined direction.

The constituent elements of the luminaire 2 are described below in detail. The first light source unit 22 has a high maximum luminance and a small area of the light-emitting portion. In contrast, each of the second light source units 23A and 23B has a lower maximum luminance but a larger area of the light-emitting portion as compared to the first light source unit 22. The first diffusing unit 24 has a higher degree of diffusion as compared to the second diffusing units 25A and 25B. The first light source unit 22 and the first diffusing unit 24 are combined to configure a first lighting unit. Similarly, the second light source unit 23A and the second diffusing unit 25A are combined as well as the second light source unit 23B and the second diffusing unit 25B are combined to configure a second lighting unit.

As illustrated in FIG. 6, in the luminaire 2, the second lighting unit is divided into a first portion that includes the second light source unit 23A and the second diffusing unit 25A, and a second portion that includes the second light source unit 23B and the second diffusing unit 25B. In the luminaire 2, the first lighting unit is placed in a sandwiched manner between the first portion and the second portion of the second lighting unit. However, that is not the only possible case. Alternatively, the second lighting unit can be placed around the first lighting unit or can be placed to enclose the first lighting unit. Herein, it is desirable that the second lighting unit is disposed along at least two directions around the first lighting unit. Meanwhile, the positioning relationship between the first lighting unit and the second lighting unit can be opposite to the positioning relationship described above.

As a result of combining the second light source units 23A and 23B respectively with the second diffusing units 25A and 25B, it becomes possible to reduce the glare while maintaining a high luminous efficiency. Moreover, as a result of combining the first light source unit 22 with the first diffusing unit 24, it becomes possible to reduce the glare with due considerations to the manufacturing cost. If the first lighting unit, which is configured by combining the first light source unit 22 and the first diffusing unit 24, and the second lighting unit, which is configured by combining the second light source units 23A and 23B and the second diffusing units 25A and 25B, are appropriately disposed not only with respect to the light-emitting faces seen not on a frequent basis in foveal vision but also with respect to the light-emitting faces seen not on a frequent basis but on rare occasions in foveal vision; it becomes possible to provide the luminaire 2 with due considerations to the manufacturing cost, the luminous efficiency, and reduction in the glare.

Meanwhile, it is desirable that the area of the light-emitting face of the first lighting unit is substantially equal to about 30% of the area of the luminous part of the luminaire 2. The basis for 30% is explained schematically. At present, while designing interior lighting by taking into account the glare, generally the unified glare rating (UGR) method is used. According to the UGR method, the visual field applied in a design is defined in the position index table written in the technical report CIE 117-1995 published by the International Commission on Illumination. According to the position index table, the applicable range of vision is about 70° from side to side in the horizontal direction and about 60° in the elevation angle direction.

Generally, it is considered that most of the work of the workers is done while keeping the horizontal direction as the visual field. In this case, at the time of doing the work while keeping the horizontal direction as the visual field, it can be thought that the light having the elevation angle equal to or greater than about 60° does not really enter the field of view of the workers, and there is not much effect as far as the glare is concerned. That is, in the present method of designing the illumination by taking into account the glare, the information of light having the elevation angle equal to or smaller than about 60° is mainly used, and the information of light having the elevation angle equal to or greater than about 60° is nearly not used.

In other words, the light-emitting faces that are seen not on a frequent basis but on rare occasions can be said to represent information of light having the elevation angle equal to or greater than about 60°. In terms of light distribution data of a luminaire, it can be said that such light-emitting faces represent the light distribution data of angles equal to or smaller than about 30° with respect to the vertical angle. That is, the light-emitting faces that are seen not on a frequent basis but on rare occasions indicate the portions having the size of about 30° of the entire luminous part (and positioned near the center).

Thus, in the luminaire 2 according to the second embodiment, any light-emitting face that is configured with the combination of a light source unit and a diffusing unit is set to have the size within a predetermined range of error from 30% of the entire luminous part. For example, any light-emitting face is set to have the size equal to or greater than 26% and equal to or smaller than 34% of the entire luminous part. With that, it becomes possible to achieve reduction in the glare of the luminous part that is seen not on a frequent basis but only on rare occasions.

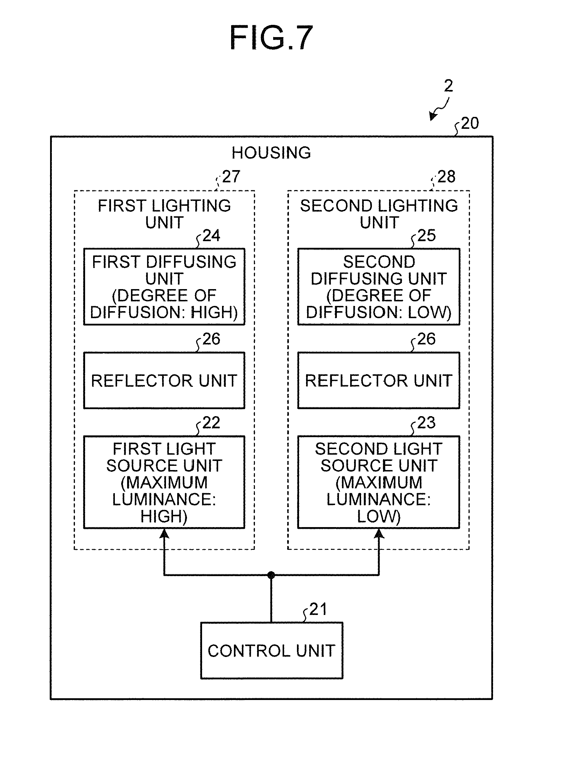

FIG. 7 is a functional block diagram for explaining the functions of the luminaire 2 according to the second embodiment. In FIG. 7, the constituent elements identical to the constituent elements illustrated in FIG. 6 are referred to by the same reference numerals, and the detailed explanation thereof is not repeated. Moreover, in FIG. 7, the second light source units 23A and 23B are collectively illustrated as a second light source unit 23. Similarly, the second diffusing units 25A and 25B are collectively illustrated as a second diffusing unit 25.

A first lighting unit 27 includes the first light source unit 22, the reflector unit 26, and the first diffusing unit 24. A second lighting unit 28 includes the second light source unit 23, the reflector unit 26, and the second diffusing unit 25. Thus, the reflector unit 26 is the common constituent element between the first lighting unit 27 and the second lighting unit 28. The control unit 21 drives the first light source unit 22 and the second light source unit 23, and illuminates them. In the first lighting unit 27, the light emitted from the first light source unit 22 is thrown out to the outside through the first diffusing unit 24 and is reflected from the reflector unit 26. Moreover, the light reflected from the reflector unit 26 is thrown out to the outside through the first diffusing unit 24 along with the light emitted from the first diffusing unit 24. The configuration of the second lighting unit 28 is identical to the configuration of the first lighting unit 27. Hence, that explanation is not given.

Meanwhile, in the explanation given above, the maximum luminance of the light-emitting face in the second lighting unit 28 is set to be substantially equal to the maximum luminance of the light-emitting face in the first lighting unit 27. However, that is not the only possible case. Alternatively, the maximum luminance of the light-emitting face in the second lighting unit 28 can be set to be higher than the maximum luminance of the light-emitting face in the first lighting unit 27; or the maximum luminance of the light-emitting face in the first lighting unit 27 can be set to be higher than the maximum luminance of the light-emitting face in the second lighting unit 28.

Third embodiment

Given below is the explanation of a third embodiment.

In the third embodiment, the explanation is given about an example in which light emitting diode (LED) modules are used as the light sources in each of the first light source unit 22, the second light source unit 23A, and the second light source unit 23B of the luminaire 2 according to the second embodiment.

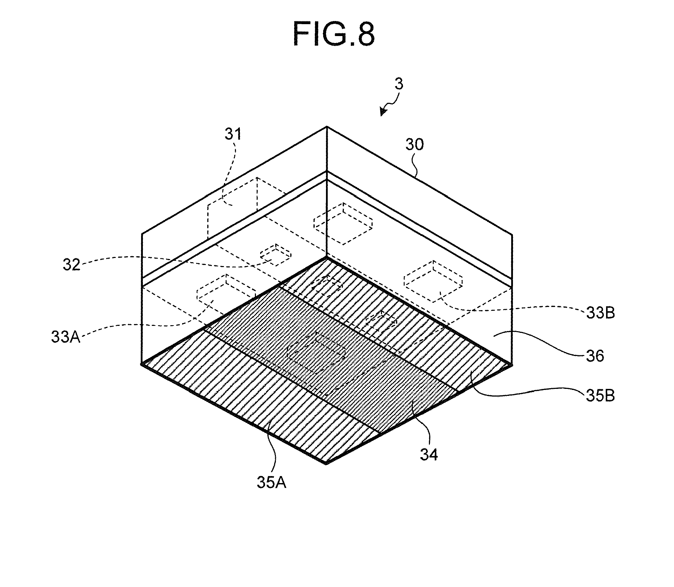

FIG. 8 is a perspective diagram that schematically illustrates a luminaire 3 according to the third embodiment. As illustrated in FIG. 8, the luminaire 3 according to the third embodiment includes a DC power supply unit 31; a first LED module 32 functioning as a light source unit; second LED modules 33A and 33B functioning as light source units; a first diffuser 34 functioning as a diffusing unit; second diffusing units 35A and 35B functioning as diffusing units; and a reflector unit 36. All these constituent elements are housed in a housing 30. In the example illustrated in FIG. 8, each of the first LED module 32, the second LED module 33A, and the second LED module 33B includes a plurality of LED modules.

Each of the first LED module 32, the second LED module 33A, and the second LED module 33B includes one or more LEDs as light sources, and has the output (luminance) controlled by the current value of the direct-current power supplied from the DC power supply unit 31. The first diffusing unit 24 diffuses the light emitted from the first LED module 32. The second diffusing units 35A and 35B respectively diffuse the light emitted from the second LED modules 33A and 33B. The reflector unit 36 reflects the light emitted from each of the first LED module 32, the second LED module 33A, and the second LED module 33B in a corresponding predetermined direction.

The constituent elements of the luminaire 3 are described in detail. The first LED module 32 has a high maximum luminance and a small area of the light-emitting portion. In contrast, each of the second LED modules 33A and 33B has a lower maximum luminance but a larger area of the light-emitting portion as compared to the first LED module 32. The first diffuser 34 has a higher degree of diffusion as compared to the second diffusing units 35A and 35B. The first LED module 32 and the first diffuser 34 are combined to configure a first lighting unit. Similarly, the second LED module 33A and the second diffuser 35A are combined as well as the second LED module 33B and the second diffuser 35B are combined to configure a second lighting unit.

As illustrated in FIG. 8, in the luminaire 3, the second lighting unit is divided into a first portion that includes the second LED module 33A and the second diffuser 35A, and a second portion that includes the second LED module 33B and the second diffuser 35B. In the luminaire 3, the first lighting unit is placed in a sandwiched manner between the first portion and the second portion of the second lighting unit. However, that is not the only possible case. Alternatively, the second lighting unit can be placed around the first lighting unit or can be placed to enclose the first lighting unit. Herein, it is desirable that the second lighting unit is disposed along at least two directions around the first lighting unit. Meanwhile, the positioning relationship between the first lighting unit and the second lighting unit can be opposite to the positioning relationship described above. Moreover, it is desirable that the area of the light-emitting face of the first lighting unit is substantially equal to about 30% of the area of the luminous part of the luminaire 3.

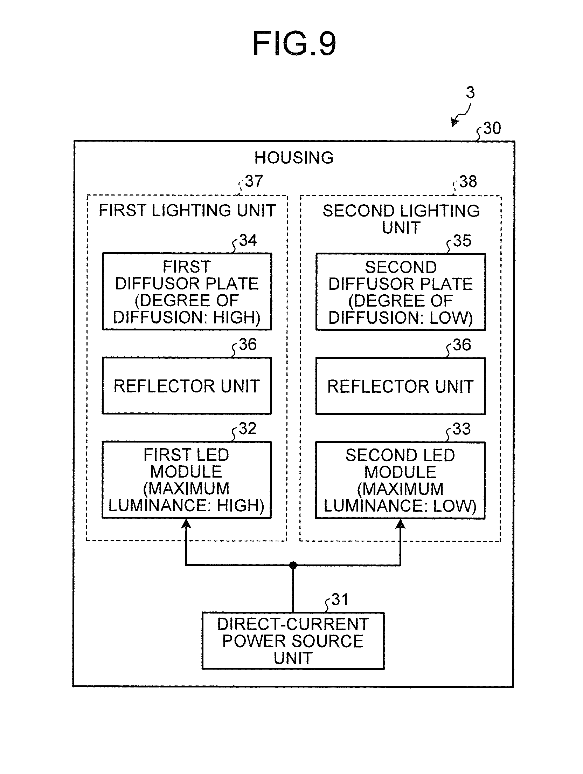

FIG. 9 is a functional block diagram for explaining the functions of the luminaire 3 according to the third embodiment. In FIG. 9, the constituent elements identical to the constituent elements illustrated in FIG. 8 are referred to by the same reference numerals, and the detailed explanation thereof is not repeated. Moreover, in FIG. 9, the second LED modules 33A and 33B are collectively illustrated as a second LED module 33. Similarly, the second diffusing units 35A and 35B are collectively illustrated as a second diffuser 35.

A first lighting unit 37 includes the first LED module 32, the reflector unit 36, and the first diffuser 34. A second lighting unit 38 includes the second LED module 33, the reflector unit 36, and the second diffuser 35. Thus, the reflector unit 36 is the common constituent element between the first lighting unit 37 and the second lighting unit 38. The DC power supply unit 31 drives the first LED module 32 and the second LED module 33, and illuminates them. In the first lighting unit 37, the light emitted from the first LED module 32 is thrown out to the outside through the first diffuser 34 and is reflected from the reflector unit 36. Moreover, the light reflected from the reflector unit 36 is thrown out to the outside through the first diffuser 34 along with the light emitted from the first diffuser 34. The configuration of the second lighting unit 38 is identical to the configuration of the first lighting unit 37. Hence, that explanation is not given.

The first LED module 32 as well as the second LED module 33 is configured with a ceramic substrate; a plurality of white LED packages installed on one face of the ceramic substrate; and a terminal for establishing connection with a power source unit. Herein, an LED package includes an LED chip to make it easier to get connected with the substrate. Thus, a single LED package configures a single light source.

As the first LED module 32, it is possible to implement an LED module in which white LED packages have a large-sized light-emitting portion. As an LED package of such a type, it is possible to use, for example, a chip on board (COB) having a large-sized light-emitting portion by arranging a plurality of LED chips in a compact manner. On the other hand, as the second LED module 33, it is possible to implement an LED module in which white LED packages have a small-sized light-emitting portion. As an LED package of such a type, it is possible to use, for example, white LED packages of the surface mount device (SMD) type. Meanwhile, it is desirable that a heat-conducting sheet or grease is applied in between the materials (such as portions of the housing) that come in contact with the first LED module 32 and the second LED module 33.

Meanwhile, the configuration of the first LED module 32 and the second LED module 33 is not limited to the configuration described above. For example, the second LED module 33 can be configured by closely arranging white LED packages of the SMD type or can be configured using white organic light emitting diode (OLED).

Moreover, it is also possible that the first LED module 32 and the second LED module 33 have different light distribution characteristics. For example, white LED packages having the light distribution characteristic called Lambertian distribution (Lambertian surface) can be used in the second LED module 33; while white LED packages having directional distribution of luminous intensity can be used in the first LED module 32. The uniform diffuser points to a light-emitting face that has the same luminance when viewed from any angle, and is non-directional as far as the light distribution is concerned.

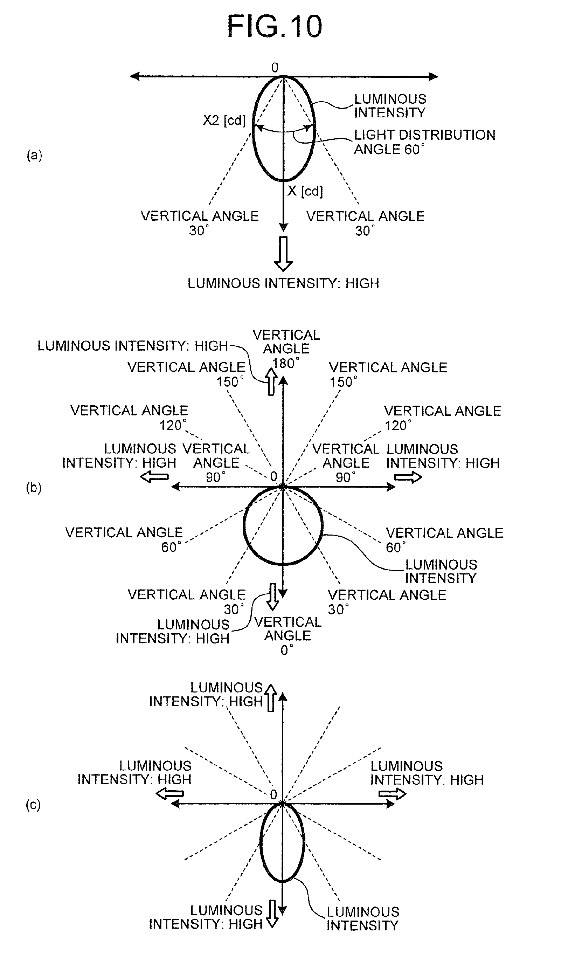

Herein, explained below in a schematic manner and with reference to FIG. 10 are the directional characteristics of a light source. The spread of light emitted from a light source is expressed as the light distribution, and is illustrated as a light distribution diagram in which the luminous intensity [ cd] (candela) is plotted. When the spread of light, that is, the light distribution is expressed in terms of an angle; that angle is called a spread angle. Generally, as illustrated in section (a) in FIG. 10, an angle in the range of angles in half of the bottom luminous intensity is called a spread angle. In the example illustrated in section (a) in FIG. 10, the portion equal to half of the bottom luminous intensity intersects with vertical angles of 30°, and the spread angle is equal to 60°.

The spread angle is broadly divided into the following five types depending on the angle: a narrow-angle-type spread angle (smaller than 15° with respect to the vertical direction); a middle-angle-type spread angle (equal to or greater than 15° but smaller than 30° with respect to the vertical direction); a wide-angle-type spread angle (equal to or greater than 30° but smaller than 90° with respect to the vertical direction); a semi-overall-type spread angle (equal to or greater than 90° but smaller than 180° with respect to the vertical direction); and an overall-type spread angle (180° with respect to the vertical direction).

In the example illustrated in section (b) in FIG. 10, in the range of angles in half of the bottom luminous intensity, an angle equal to or greater than 30° but smaller than 90° with respect to the vertical direction represents a wide-angle-type spread angle and is said to have a wide light distribution. In contrast, in the example illustrated in section (c) in FIG.

10, in the range of angles in half of the bottom luminance, an angle equal to or greater than 15° but smaller than 30° with respect to the vertical direction represents a middle-angle-type spread angle and is said to have a narrow light distribution. A light source having directional distribution of luminous intensity points to a light source having a narrow-angle-type spread angle, a middle-angle-type spread angle, or a wide-angle-type spread angle. On the other hand, a light source having non-directional distribution of luminous intensity points to a light source having a semi-overall-type spread angle or an overall-type spread angle.

In this way, if a light source unit having a non-directional light-emitting face is used, then the light having a wide light distribution can be obtained without difficulty. Thus, a diffuser having a comparatively lower degree of diffusion can be used as the first diffuser 34. As a result, it becomes possible to reduce the glare and to obtain the light of high luminous efficiency.

Meanwhile, the configuration can be such the first LED module 32 and the second LED module 33 has different correlated color temperatures. For example, white LED packages of a high correlated color temperature can be used in the second LED module 33, and white LED packages of a low correlated color temperature can be used in the first LED module 32. Generally, as compared to a light source having a high correlated color temperature, a light source having a low correlated color temperature tends not to cause a glare. For that reason, if the first LED module 32 of the first lighting unit 37, which constitutes a light-emitting face seen not on a frequent basis but only on rare occasions, is set to have a lower correlated color temperature than the correlated color temperature of the second LED module 33 of the second lighting unit 38, which constitutes a light-emitting face seen on a frequent basis; then it becomes possible to obtain the lighting in which the glare is reduced to a greater extent.

Moreover, the configuration can be such that the first LED module 32 and the second LED module 33 have different color rendering indices. For example, white LED packages having a high color rendering index can be used in the second LED module 33, while white LED packages having a low color rendering index can be used in the first LED module 32. Generally, as compared to a light source having poor color rendering properties, a light source having excellent color rendering properties tends to have a good color appearance. For that reason, if the first LED module 32 of the first lighting unit 37, which constitutes a light-emitting face seen not on a frequent basis but only on rare occasions, is set to have a lower color rendering index than the color rendering index of the second LED module 33 of the second lighting unit 38, which constitutes a light-emitting face seen on a frequent basis; then it becomes possible to obtain the lighting in which not only the glare is reduced to a greater extent but also the appearance of colors is taken into account.

In this way, by having different arrangements of LED packages, different light distribution characteristics, different correlated color temperatures, and different color rendering indices for the first LED module of the first lighting unit 37 and the second LED module 33 of the second lighting unit 38; it becomes possible to reduce the glare in a more efficient manner.

The reflector unit 36 can be made of, for example, a metallic plate. For example, the reflector unit 36 is made of a material such as a steel plate, and is disposed to encompass the first LED module 32 and the second LED module 33. Herein, it is desirable that the inner side of the reflector unit 36, that is, the surface of the reflector unit 36 facing the first LED module 32 and the second LED module 33 is coated with a highly reflective paint of white color. However, the configuration of the reflector unit 36 is not limited to this configuration. Alternatively, the reflector unit 36 can be made of plastic.

Meanwhile, the first diffuser 34 and the second diffuser 35 can be made of a diffusing material such as polycarbonate resin or acrylic resin. Using such types of resin, it is possible to easily select materials of various degrees of diffusion. A diffusing material having a low degree of diffusion is selected for the second diffuser 35, while a diffusing material having a high degree of diffusion is selected for the first diffuser 34. However, that is not the only possible case. Alternatively, for example, it is possible to use a PDLC (polymer dispersed liquid crystal) for which the degree of diffusion can be set using the voltage value of the power source.

The DC power supply unit 31 is driven by, for example, a commercial power source; and is capable of supplying direct-current electricity to the first LED module 32 and the second LED module 33 in a mutually independent manner. With that, the light emission and output of the first LED module 32 and the second LED module 33 can be controlled in an independent manner. However, that is not the only possible case. Alternatively, the DC power supply unit 31 can make use of a power source capable of performing remote operations from outside using infrared communication or a power source that is driven by the electricity received from a DC power supply such as a photovoltaic cell.

The housing 30 is made of a metallic member such as a steel plate or aluminum. Herein, the housing 30 houses the first LED module 32, the second LED module 33, the reflector unit 36, the first diffuser 34, the second diffuser 35, and the DC power supply unit 31; as well as has the role of releasing the heat generated due to the heating of the first LED module 32 and the second LED module 33. However, the configuration of the housing 30 is not limited to this configuration. Alternatively, for example, the housing 30 can also have a heat pipe or a heat releasing fin for the purpose of enhancing the heat releasing capability. Moreover, the DC power supply unit 31 can be installed on the outside of the housing 30.

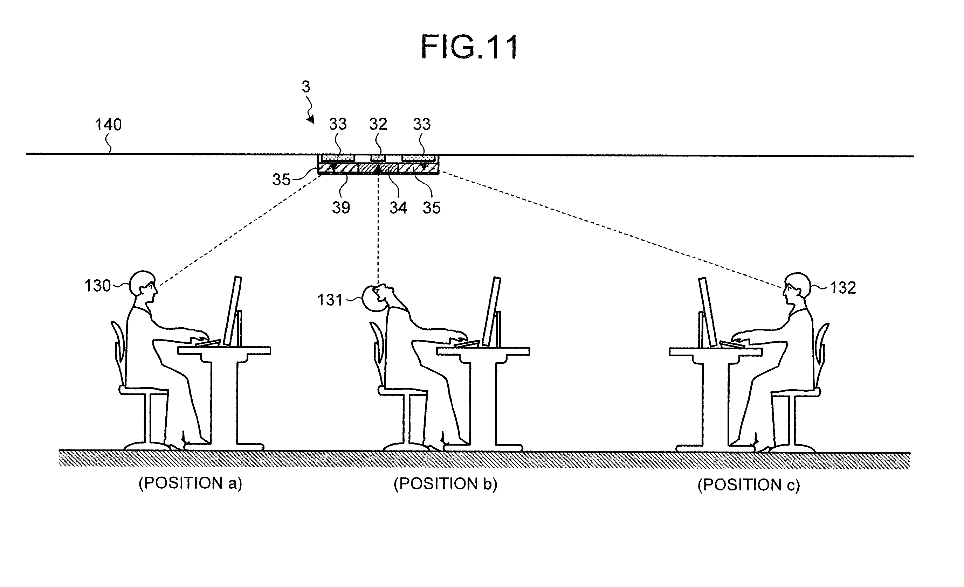

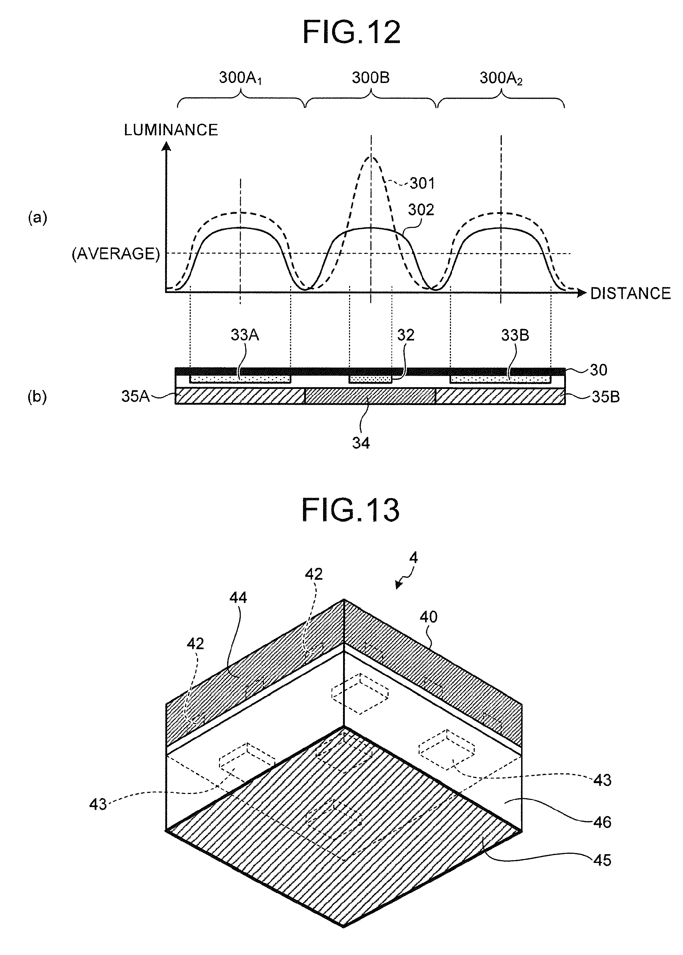

Explained below with reference to FIGS. 11 and 12 is the effect achieved with the use of the luminaire 3 according to the third embodiment. In the explanation with reference to FIGS. 11 and 12, the constituent elements identical to the constituent elements illustrated in FIGS. 3 and 8 are referred to by the same reference numerals, and the detailed explanation thereof is not repeated.

In FIG. 11 is illustrated an environment in which the luminaire 3 according to the third embodiment is installed. In an identical manner to the example illustrated in FIG. 3, the luminaire 3 is installed to the ceiling 140 in such a way that a luminous part 39 thereof is facing the floor. Moreover, it is assumed that the worker 131 is present at the position b that is close to the position directly below the luminaire 3, while it is assumed that workers 130 and 132 are present at positions a and c, respectively, that are distant from the position b across the luminaire 3. Moreover, it is assumed that the workers 130 and 132 are looking toward the luminaire 3.

Herein, for the anteriorly-facing workers 130 and 132, the luminous part 39 comes in sight. Thus, there is a possibility that the luminous part 39 is seen on a frequent basis in the center of the fields of vision of the workers 130 and 132. In contrast, the worker 131 is present close to the position directly below the luminaire 3, that is, directly below the luminous part 39. Hence, the luminous part 39 is not seen on a frequent basis but may be seen on rare occasions in foveal vision.

FIG. 12 is a diagram for explaining the characteristics of the luminaire 3 according to the third embodiment. In FIG. 12, section (a) illustrates an example of the luminance distribution in the luminous part 39 of the luminaire 3, while section (b) illustrates a cross-sectional view of the luminaire 3 corresponding to section (a). An example of the luminance distribution resulting from the light-emitting portions of the first LED module 32, the second LED Module 33A, and the second LED module 33B is illustrated by a curved line 301 in section (a) in FIG. 12. As indicated by a range 300B in section (a) in FIG. 12, the luminance distribution resulting from the light-emitting portion of the first lighting unit 37, that is, the first LED module 32 is small in width and has a high peak. In contrast, as indicated by ranges $300A_1$ and $300A_2$ in section (a) in FIG. 12, the luminance distribution resulting from the light-emitting portions of the second lighting unit 38, that is, the second LED modules 33A and 33B have a shorter peak than the peak of the first LED module 32 and is large in width.

An example of the luminance distribution in the surfaces, that is, the light-emitting faces of the first diffuser 34 and the second diffusers 35A and 35B is illustrated by a curved line 302 in section (a) in FIG. 12. Herein, since the second LED modules 33A and 33B having a low maximum luminance and a large area of the light-emitting portion are respectively combined with the second diffusers 35A and 35B having a low degree of diffusion, the luminance distribution of the light emitted from the second LED modules 33A and 33B is substantially identical to the configuration in which the second diffusers 35A and 35B are not disposed. On the other hand, since the first LED module 32 having a high maximum luminance and a small area of the light-emitting portion is combined with the first diffuser 34 having a high degree of diffusion, the luminance distribution of the light emitted from the first LED module 32 has a suppressed peak and a dispersed luminance thereby making the luminance distribution smooth. Moreover, because of the first diffuser 34 having a high degree of diffusion and the second diffusers 35A and 35B having a low degree of diffusion, the luminance distribution resulting from the light-emitting faces of the first LED module 32, the second LED module 33A, and the second LED module 33B is kept at the substantially equal level.

In the luminaire 3, the second lighting unit 38 having a low degree of luminance and a low degree of diffusion is disposed around the first lighting unit 37 having a high degree of luminance and a high degree of diffusion. Hence, even in the case when the workers 130 and 132 see the luminous part 39 of the luminaire 3 in foveal vision, the glare that is felt by the workers 130 and 132 is reduced.

Moreover, for example, even in the case when the worker 131 looks upward at the luminous part 39 of the luminaire 3 on rare occasions, the light that directly enters foveal vision of the worker 131 is the light that is coming from the first lighting unit 37, that is, the light emitted from the first LED module 32 having a low degree of luminance and diffused at the first diffuser 34 having a high degree of diffusion. Hence, the glare felt by the worker 131 is reduced. Moreover, since the second lighting unit 38 having a low degree of luminance and a low degree of diffusion is disposed around the first lighting unit 37; even if the light emitted from the second LED modules 33A and 33B enters foveal vision of the worker 131, the glare felt by the worker 131 is reduced.

Meanwhile, in the luminaire 3, in the second lighting unit 38 that has the light-emitting faces occupying half or more of the area of the luminous part 39, the second diffusers 35A and 35B having a low degree of diffusion are used. That is, diffusers having excellent luminous efficiency are used. That enables achieving enhancement in the lighting efficiency. Moreover, the luminaire 3 is configured by means of a combined use of the second lighting unit 38, which includes a large number of LED chips as light sources, and the first lighting unit 37, which includes a comparatively smaller number LED chips as light sources as compared to the second lighting unit 38. For that reason, it becomes possible to reduce the manufacturing cost of the luminaire 3. In this way, according to the third embodiment, it becomes possible to provide the luminaire 3 with due considerations to the manufacturing cost, the luminous efficiency, and reduction in the glare.

Meanwhile, as described above, the reflector unit 36 is the common constituent element between the first lighting unit 37 and the second lighting unit 38. However, that is not the only possible case. For example, the reflector unit 36 can be disposed to further separate the first lighting unit 37 and the second lighting unit 38 from each other.

Moreover, as described above, the second lighting unit 38 is disposed on both sides of the first lighting unit 37. However, that is not the only possible case. Alternatively, for example, as explained in the first embodiment, only a single first lighting unit 37 and a single second lighting unit 38 can be disposed with respect to the luminous part 39; or a plurality of first lighting units 37 and a plurality of second lighting units 38 can be disposed with respect to the luminous part 39. Still alternatively, in addition to the first lighting unit 37 and the second lighting unit 38, a third lighting unit having still different luminance characteristics can be disposed.

Meanwhile, the first lighting unit 37, the second lighting unit 38, and the luminous part 39 are not limited to have the rectangular shape and can have a different shape such as another polygonal shape, or a circular shape, or an elliptical shape, or the like.

Moreover, as described above, the luminous part 39 is configured to serve as a diffusing unit in entirety due to the first diffuser 34, the second diffuser 35A, and the second diffuser 35B. However, that is not the only possible case. Alternatively, it is also possible to configure the luminous part 39 with an area not considered to be a part of the diffusing unit. With that, it becomes to further enhance the lighting efficiency. For example, in the second lighting unit 38 that has a low degree of luminance and a low degree of diffusion, it is possible to think of having an area not considered to be a part of the diffusing unit.

Furthermore, as described above, the maximum luminance of the light-emitting faces of the second lighting unit 38 is set to be substantially equal to the maximum luminance of the light-emitting faces of the first lighting unit 37. However, that is not the only possible case. Alternatively, the maximum luminance of the light-emitting faces of the second lighting unit 38 can be set to be higher than the maximum luminance of the light-emitting face of the first lighting unit 37; or the maximum luminance of the light-emitting face of the first lighting unit 37 can be set to be higher than the maximum luminance of the light-emitting faces of the second lighting unit 38.

Moreover, as described above, the first LED module 32 having a high maximum luminance and a small area of the light-emitting portion is combined with the first diffuser 34 having a high degree of diffusion, while the second LED modules 33A and 33B having a low maximum luminance and a large area of the light-emitting portion are respectively combined with the second diffusers 35A and 35B having a low degree of diffusion. However, that is not the only possible case.

Alternatively, for example, it is possible to think of a case in which the product of the maximum luminance of the second LED module 33A and the number of LED packages included in the second LED module 33 is greater than the product of the maximum luminance of the first LED module 32 and the number of LED packages included in the first LED module 32. In this case, a diffuser having a high degree of diffusion can be combined with the second LED module 33A, and a diffuser having a low degree of diffusion can be combined with the first LED module 32. The same is the case for the second LED module 33B.

Meanwhile, generally the glare is felt from a light source unit having a high maximum luminance. However, depending on the conditions, there are times when the glare is felt even if the maximum luminance is low. For example, from among a light source unit A including a single light source having the maximum luminance of 10001 cd/m$^2$ and a light source unit B including 100 light sources having the maximum luminance of 1000 cd/m$^2$, it is believed that the light source B is felt to be more glaring than the light source A. For that reason, depending on the product of the number of light sources included in a light source unit and the maximum luminance of that light source unit, selection is made about the degree of diffusion of the diffusing unit to be combined with the light source unit. With that, it becomes possible to provide a luminaire in which the glare can be reduced to a greater extent.

Fourth embodiment

Given below is the explanation of a fourth embodiment. In the fourth embodiment, the explanation is given about a luminaire in which the reflection from the ceiling is used in a proactive way. FIG. 13 is a perspective view that schematically illustrates a luminaire 4 according to the fourth embodiment.

As illustrated in FIG. 13, the luminaire 4 according to the fourth embodiment includes, for example, a first LED module 42 that functions as a first lighting unit; a second LED module 43 that functions as a second lighting unit; a first diffuser 44 that functions as a first diffusing unit; a second diffuser 45 that functions as a second diffusing unit; and a reflector unit 46. All these constituent elements are housed in a housing 40. Meanwhile, in the example illustrated in FIG. 13, a DC power supply unit that supplies direct-current power to the first LED module 42 and the second LED module 43 is not illustrated. Moreover, in the example illustrated in FIG. 13, the first LED module 42 as well as the second LED module 43 includes a plurality of LED modules.

The first LED module 42 has a high maximum luminance and a small area of the light-emitting portion. In contrast, the second LED module 43 has a lower maximum luminance but a larger area of the light-emitting portion as compared to the first LED module 42. The second LED module 43 and the second diffuser 45 are combined to configure a second lighting unit. The reflector unit 46 is disposed around the lateral sides of the second lighting unit. The first LED module 42 is disposed on the back side of the second LED module 43 in such a way that it emits light in the direction toward the second LED module 43. The first diffuser 44 is disposed around the first LED module 42. As the first diffuser 44 is selected a diffuser having a higher degree of diffusion as compared to the second diffuser 45. Herein, the first diffuser 44 is combined with the first LED module 42 to configure a first lighting unit.

With such a configuration, when the luminaire 4 is installed in such a way that the second LED module 43 emits light in the direction of the floor; the first LED module 42 happens to emit light in the direction of the ceiling. In other words, the light emitted from the first LED module 42 is emitted with a vertical angle equal to or greater than 90°. The light emitted from the second LED module 43 is emitted toward the floor through the second diffuser 45. In contrast, the emitted from the first LED module 42 is emitted from the lateral sides of the luminaire 4 toward the ceiling through the first diffuser 44.

If the light sources have the same luminance, the light emitted therefrom is not easily felt to be glaring in the case in which the surrounding area is bright as compared to the case in which the surrounding area is dark. For that reason, it is possible to think that the glare of the luminaire can be reduced even if the ceiling is bright. In the fourth embodiment, since the light emitted from the first LED module 42 is thrown out at a vertical angle equal to or greater than 90°, it becomes possible to brighten up the ceiling surface. Hence, by using the luminaire 4, the glare felt by the workers can be reduced to a greater extent.

For example, even if an worker who is present close to the position directly below the luminaire 4 looks upward at the light-emitting face of the second lighting unit (i.e., looks upward at the second diffuser 45) of the luminaire 4 on rare occasions, the light entering directly in foveal vision is the light emitted from the second LED module 43 having a low degree of luminance and then diffused at the second diffuser 45. Along with that; the ceiling, which is in the background of the luminaire 4, is illuminated by the first lighting unit. As a result, the glare felt by that worker is reduced.

On the other hand, when an worker who is present at a position distant from the area directly below the luminaire 4 is facing in the direction of the luminaire 4 and looks at the luminaire 4, the light entering foveal vision is the light emitted from the first LED module 42, which has a high degree of luminance, and diffused at the first diffuser 44. Hence, the glare felt by that worker is reduced. Moreover, since the ceiling is illuminated by the first lighting unit, the lighting efficiency is excellent.

Meanwhile, as described above, the maximum luminance of the light-emitting face of the second lighting unit is set to be substantially equal to the maximum luminance of the light-emitting face of the first lighting unit. However, that is not the only possible case. Alternatively, the maximum luminance of the light-emitting face of the second lighting unit can be set to be higher than the maximum luminance of the light-emitting face of the first lighting unit; or the maximum luminance of the light-emitting face of the first lighting unit can be set to be higher than the maximum luminance of the light-emitting faces of the second lighting unit.

Fifth embodiment

Given below is the explanation of a fifth embodiment.

In the first four embodiments described above, the configuration is such that a first lighting unit, which is configured by combining a light source unit having a high degree of luminance with a diffusing unit having a high degree of diffusion, is distinctly-separated from a second lighting unit, which is configured by combining a light source unit having a low degree of luminance with a diffusing unit having a low degree of diffusion. In contrast, in the fifth embodiment, the luminance of light source units and the degree of diffusion of a diffusing unit is varied in a stepwise fashion according to the position of the luminous part, and it is ensured that switching from the first lighting unit to the second lighting unit happens in continuity.

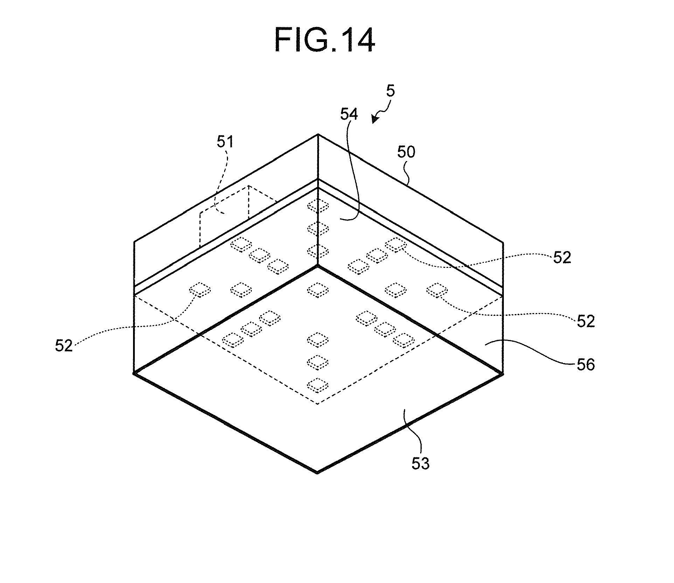

FIG. 14 is a perspective view that schematically illustrates a luminaire 5 according to the fifth embodiment. As illustrated in FIG. 14, the luminaire 5 according to the fifth embodiment includes a DC power supply unit 51; LED modules 52 that function as light source units and that are mounted on a light source unit mounting surface 54; a diffuser 53 that functions as a diffusing unit; and a reflector unit 56. All these constituent elements are housed in a housing 50.

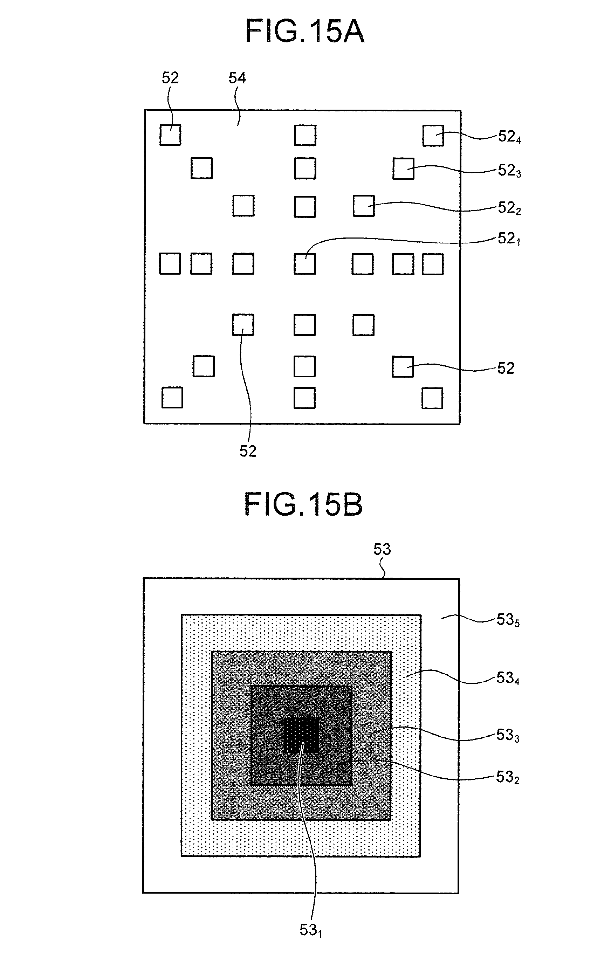

FIG. 15A is a diagram illustrating a configuration example of the light source units in the luminaire 5 according to the fifth embodiment. FIG. 15B is a diagram illustrating a configuration example of the diffuser plate in the luminaire 5. FIGS. 15A and 15B are front views of the luminaire 5.

In FIG. 15A is illustrated an example of the arrangement of the LED modules 52 in the luminaire 5 according to the fifth embodiment. In FIG. 15A, a plurality of LED modules 52 is mounted on the light source unit mounting surface 54 of the luminaire 5. In the fifth embodiment, as illustrated by LED modules $52_1$, $52_2$, $52_3$, and $52_4$; the LED modules 52 are arranged from the center of the light source unit mounting surface 54 toward the periphery thereof with a stepwise decrease in the space between the adjacent LED modules 52.

Moreover, starting from the center of the light source unit mounting surface 54 toward the periphery thereof, the luminance of the LED modules 52 goes on decreasing in a sequential manner. For example, from among the LED modules $52_1$, $52_2$, $52_3$, and $52_4$; the LED module $52_1$ positioned in the center of the light source unit mounting surface 54 has the highest luminance. Then, the luminance goes on decreasing in a sequential manner from the center of the light source unit mounting surface 54 toward the periphery thereof. Thus, the LED module $52_1$ positioned on the outermost periphery has the lowest luminance.

FIG. 15B is a diagram illustrating a configuration example of the diffuser 53 in the luminaire 5 according to the fifth embodiment. In the example illustrated in FIG. 15B, the diffuser 53 has a plurality of areas $53_1$, $53_2$, $53_3$, $53_4$, and $53_5$ in which the degree of diffusion goes on decreasing in a sequential manner from the center of the diffuser 53 toward the periphery thereof. That is, from among the areas $53_1$, $53_2$, $53_3$, $53_4$, and $53_5$; the area $53_1$ positioned in the center of the diffuser 53 has the highest degree of diffusion. Then, the degree of diffusion goes on decreasing in a sequential manner from the center of the diffuser 53 toward the periphery thereof. Thus, the area $53_5$ positioned on the outermost periphery of the diffuser 53 has the lowest degree of diffusion.

Herein, the explanation is given for a case in which the degree of diffusion in the diffuser 53 changes in a stepwise fashion according to the position. However, that is not the only possible case. Alternatively, the degree of diffusion in the diffuser 53 can change in continuity according to the position.

Generally, it is considered that most of the work of the workers is done while keeping the horizontal direction as the visual field. Hence, it can be thought that the surrounding area of the luminous part, that is, the diffuser easily comes in sight, but the portion directly below the luminous part does not easily come in sight. Thus, in the luminaire 5, the LED modules 52 having different degrees of luminance according to the positions are combined with the diffuser 53 having different degrees of diffusion according to the positions; and it is ensured that the peripheral part of the luminous part has a low degree of luminance and a low degree of diffusion. As a result, it becomes possible to reduce the glare from the luminous part that easily comes in sight. That is, it becomes possible to reduce the glare from the front surface of the diffuser 53.

In the luminaire 5, the diffuser 53 is not set to have a uniform degree of diffusion within the luminous part. Rather, by taking into account the portion seen on a frequent basis in foveal vision and the portion seen only rarely in foveal vision, the degree of diffusion within the luminous part is varied in a sequential manner according to the position. As a result, not only the glare is reduced, but also the lighting efficiency is enhanced. Moreover, by taking into account the portion seen on a frequent basis in foveal vision and the portion seen only rarely in foveal vision, the LED modules 52 are arranged in an appropriate but non-uniform manner with respect to the light source unit mounting surface 54. With that, as compared to the case in which the LED modules 52 are arranged in a uniform manner, it becomes possible to reduce the number of LED modules 52 that need to be arranged. Hence, it becomes possible to reduce the manufacturing cost. In this way, according to the fifth embodiment, the luminaire 5 can be provided with due considerations to the manufacturing cost, the luminous efficiency, and reduction in the glare.

Modification example of fifth embodiment

Given below is the explanation of a modification example of the fifth embodiment. In the modification example of the fifth embodiment, in contrast to the fifth embodiment, the light source units are arranged from the center toward the periphery with a sequential increase in the luminance and a sequential increase in the space between the adjacent light source units. Moreover, regarding the diffusing unit, the degree of diffusion goes on decreasing in a sequential manner from the center toward the periphery.

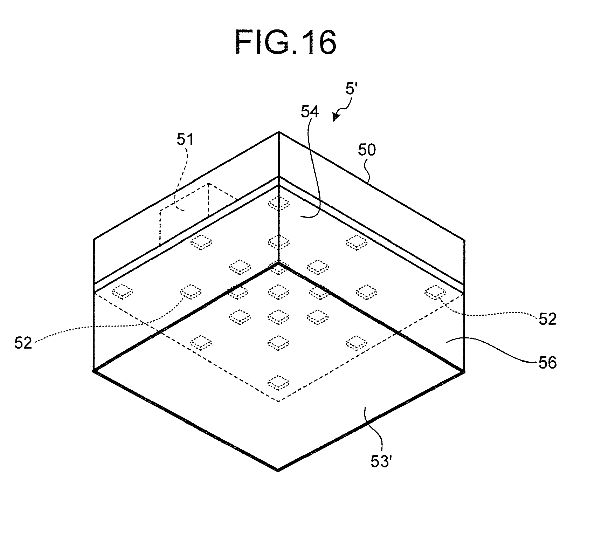

FIG. 16 is a perspective view that schematically illustrates a luminaire 5' according to the modification example of the fifth embodiment. In the explanation with reference to FIG. 16, the constituent elements identical to the constituent elements illustrated in FIG. 14 are referred to by the same reference numerals, and the detailed explanation thereof is not repeated. The luminaire 5' according to the modification example of the fifth embodiment includes the DC power supply unit 51; the LED modules 52 that function as light source units and that are mounted on the light source unit mounting surface 54; a diffuser 53' that functions as a diffusing unit; and the reflector unit 56. All these constituent elements are housed in the housing 50.

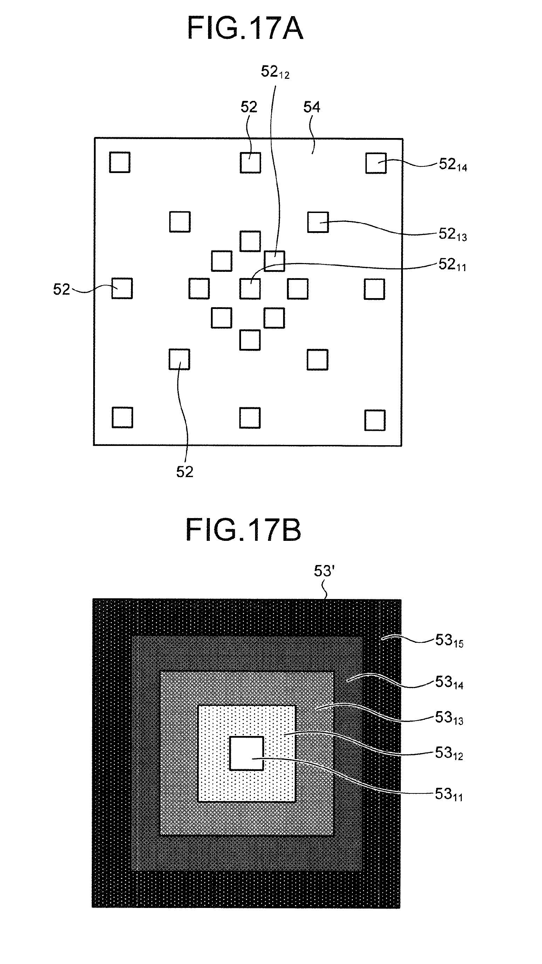

FIG. 17A is a diagram illustrating a configuration example of the light source units in the luminaire 5' according to the modification example of the fifth embodiment. FIG. 17B is a diagram illustrating a configuration example of the diffuser plate in the luminaire 5' according to the modification example of the fifth embodiment. FIGS. 17A and 17B are front views of the luminaire 5'.

In FIG. 17A is illustrated an example of the arrangement of the LED modules 52 in the luminaire 5' according to the modification example of the fifth embodiment. In FIG. 17A, a plurality of LED modules 52 is mounted on the light source unit mounting surface 54 of the luminaire 5'. In the modification example of the fifth embodiment, as illustrated by LED modules $52_{11}$, $52_{12}$, $52_{13}$, and $52_{14}$; the LED modules 52 are arranged from the center of the light source unit mounting surface 54 toward the periphery thereof with a stepwise increase in the space between the adjacent LED modules 52.

Moreover, starting from the center of the light source unit mounting surface 54 toward the periphery thereof, the luminance of the LED modules 52 goes on increasing in a sequential manner. For example, from among the LED modules $52_{11}$, $52_{12}$, $52_{13}$, and $52_{14}$; the LED module $52_{11}$ positioned in the center of the light source unit mounting surface 54 has the lowest luminance. Then, the luminance goes on increasing in a sequential manner from the center of the light source unit mounting surface 54 toward the periphery thereof. Thus, the LED module $52_{14}$ positioned on the outermost periphery has the highest luminance.

FIG. 17B is a diagram illustrating a configuration example of the diffuser 53' in the luminaire 5' according to the modification example of the fifth embodiment. In the example illustrated in FIG. 17B, the diffuser 53' has a plurality of areas $53_{11}$, $53_{12}$, $53_{13}$, $53_{14}$, and $53_{15}$ in which the degree of diffusion goes on increasing in a sequential manner from the center of the diffuser 53' toward the periphery thereof. That is, from among the areas $53_{11}$, $53_{12}$, $53_{13}$, $53_{14}$, and $53_{15}$; the area $53_{11}$ positioned in the center of the diffuser 53' has the lowest degree of diffusion. Then, the degree of diffusion goes on increasing in a sequential manner from the center of the diffuser 53' toward the periphery thereof. Thus, the area $53_{15}$ positioned on the outermost periphery of the diffuser 53' has the highest degree of diffusion.

Herein, the explanation is given for a case in which the degree of diffusion in the diffuser 53' changes in a stepwise fashion according to the position. However, that is not the only possible case. Alternatively, the degree of diffusion in the diffuser 53' can change in continuity according to the position.

In this way, in the modification example of the fifth embodiment, the LED modules 52 having different degrees of luminance according to the positions are combined with the diffuser 53' having different degrees of diffusion according to the positions; and it is ensured that the peripheral part of the luminous part has a high degree of luminance and a high degree of diffusion. In this case too, in an identical manner to the fifth embodiment, it becomes possible to reduce the glare from the luminous part that easily comes in sight. That is, it becomes possible to reduce the glare from the front surface of the diffuser 53'. With that, according to the modification example of the fifth embodiment, the luminaire 5' can be provided with due considerations to the manufacturing cost, the luminous efficiency, and reduction in the glare in an identical manner to the fifth embodiment.

Meanwhile, the configuration of the luminaire 5 according to the fifth embodiment or the configuration of the luminaire 5' according to the modification example of the fifth embodiment is not limited to the abovementioned explanation. For example, the size of the LED packages included in the LED modules 52 can be different at the center and at the periphery of the luminous part. Moreover, the arrangement of the LED packages included in the LED modules 52 can include different types of LED packages not only from the center of the luminous part to the periphery thereof but also from one end of the luminous part toward the other end thereof. Furthermore, in the diffuser 53 or the diffuser 53', it is also possible to configure an area not considered to be a part of the diffusing unit with respect to the luminous part.

Meanwhile, in the fifth embodiment or in the modification example of the fifth embodiment, in each area of the diffuser in which it is ensured that switching from the first lighting unit to the second lighting unit occurs in continuity, the maximum luminance of the light-emitting faces is explained to be substantially equal. However, that is not the only possible case. Alternatively, the maximum luminance of a light-emitting face can change depending on the position of that light-emitting face. For example, the maximum luminance of the light-emitting faces can gradually change from the first lighting unit toward the second lighting unit, or each area can have a different maximum luminance.

Another example of definition of maximum luminance

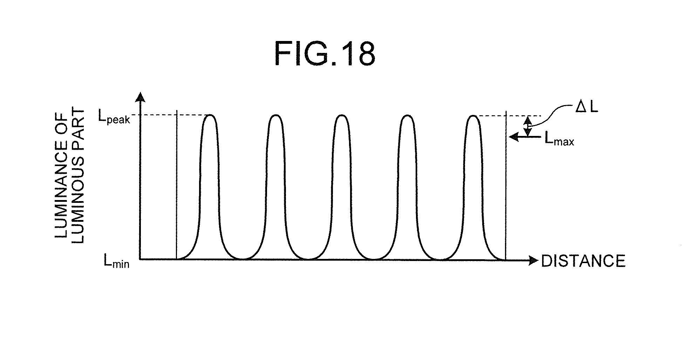

In the embodiments and the modification example described above, the explanation is given for a case in which the maximum luminance points to the maximum value of the luminance distribution in the light-emitting face of a light source unit. However, that is not the only possible case. That is, depending on the target for evaluation, there are times when the definition of the maximum luminance is difficult to make in the abovementioned manner. As another example of the definition of the maximum luminance, as illustrated in FIG. 18, a maximum luminance $L_{max}$ is obtained using a value $\Delta L$ that is calculated by multiplying a predetermined coefficient k to the different between a peak value $L_{peak}$ of the luminance distribution in the luminous part and the minimum value $L_{min}$ of the luminance distribution in the luminous part.

In FIG. 18, the vertical axis represents the luminance in the luminous part, and the horizontal axis represents the position in the luminous part. Thus, in FIG. 18 is represented an example of the luminance distribution in the luminous part.

More particularly, in this other example of the definition of the maximum luminance; the maximum luminance $L_{max}$ is calculated using Equation (1) given below. Herein, the coefficient k satisfies ($0 \leq k \leq 1$).

$$L_{max} = (L_{peak} - L_{min}) \times (1-k) + L_{min} \tag{1}$$

As an example, when the coefficient k is equal to 0.1, the value $\Delta L$ becomes equal to 10% of the difference between the peak value $L_{peak}$ and the minimum value $L_{min}$. In this case, according to Equation (1) given above, the maximum luminance $L_{max}$ is obtained as $(L_{peak} - L_{min}) \times 0.9 + L_{min}$. In an identical manner, when the coefficient k is equal to 0.2, the maximum luminance $L_{max}$ is obtained as $(L_{peak} - L_{min}) \times 0.8 + L_{min}$. In this way, the maximum luminance $L_{max}$ can be defined as the luminance that is lower by a predetermined percentage than the peak value $L_{peak}$ of the luminance distribution in the luminous part.

While certain embodiments have been described, these embodiments have been presented by way of example only, and are not intended to limit the scope of the inventions.

Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1.   A luminaire (1; 2; 3; 4; 5; 5'; 100) comprising:

a plurality of light source units (10, 11; 22, 23A, 23B; 32, 33A, 33B; 42, 43; 52; 101, 102) having mutually different characteristics; and
a plurality of diffusing units (12, 13; 24, 25A, 25B; 34, 35A, 35B; 44, 45; 53, 53'; 103, 104) diffusing light emitted from the light source units (10, 11; 22, 23A, 23B; 32, 33A, 33B; 42, 43; 52; 101, 102) and have mutually different characteristics.

2.   A luminaire (1; 2; 3; 4; 100) comprising:

a first lighting unit (27; 37) including a first light source unit (10; 22; 32; 42; 101) and a first diffusing unit (12; 24; 34; 44; 103) that are arranged in such a way that light emitted from the first light source unit (10; 22; 101) is thrown out to the outside through the first diffusing unit (12; 24; 34; 44; 103); and
a second lighting unit (28; 38) including a second light source unit (11; 23A, 23B; 33A, 33B; 43; 102) and a second diffusing unit (13; 25A, 25B; 35A, 35B; 45; 104) that are arranged in such a way that light emitted from the second light source unit (11; 23A, 23B; 33A, 33B; 43; 102) is thrown out to the outside through the second diffusing unit (13; 25A, 25B; 35A, 35B; 45; 104), the second light source unit (11; 23A, 23B; 33A, 33B; 43; 102) having a lower maximum luminance as compared to the first light source unit (10; 22; 32; 42; 101) and having a greater area of a light-emitting face as compared to the first light source unit (10; 22; 32; 42; 101), and the second diffusing unit (13; 25A, 25B; 35A, 35B; 45; 104) having a lower degree of diffusion as compared to the first diffusing unit (12; 24; 34; 44; 103).

3.   The luminaire (2; 3) according to claim 2, wherein the second lighting unit (28; 38) is disposed along at least two directions around the first lighting unit (27; 37).

4.   The luminaire(2; 3) according claim 2 or 3, wherein, the area of the light-emitting face of either one of the first lighting unit (27; 37) and the second lighting unit (28; 38) is equal to substantially 30% of the area of a luminous part.

5.   The luminaire (3; 4) according to any one of claims 2 to 4, wherein a light source included in the second light source unit (38) is a non-directional light source.

6.   The luminaire (3) according to any one of claims 2 or 5, wherein, when the product of the number of light sources included in the second light source unit (33A, 33B) and the maximum luminance of the second light source unit (33A, 33B) is greater than the product of the number of light sources included in the first light source unit (32) and the maximum luminance of the first light source unit (32), the second lighting unit (33A, 33B) is configured by combining the first light source unit (32) and the second diffusing unit (35A, 35B), while the first lighting unit (37) is configured by combining the second light source unit (33A, 33B) and the first diffusing unit (34).

7.   The luminaire (4) according to claim 2, wherein the first light source unit (42) emits light with an angle equal to or greater than 90° with respect to the vertical direction.

8.   The luminaire (3) according to any one of claims 2 to 7, wherein a correlated color temperature of the light emitted from the first light source unit (32) is different from a correlated color temperature of the light emitted from the second light source unit (33A, 33B).

9.   The luminaire (3) according to any one of claims 2 to 7, wherein a color rendering index of the light emitted from the first light source unit (32) is different from a color rendering index of the light emitted from the second light source unit (33A, 33B).

**10.** The luminaire (3) according to any one of claim 2 to 9, wherein, at least one of the first lighting unit (32) and the second lighting unit (33A, 33B) includes an area in which light emitted from a light source is thrown out to the outside without getting diffused at the light-emitting face.

**11.** The luminaire according to claim 1, wherein characteristics of the light source units and characteristics of the diffusing units change in a sequential manner from the center of a luminous part to the periphery thereof.

**12.** The luminaire according to claim 1 or 11, wherein
the luminance of the light source units (52) goes on decreasing in a sequential manner from the center of the luminous part toward the periphery thereof, and the space between the light source units (52) goes on decreasing in a sequential manner from the center of the luminous part toward the periphery thereof, and
the degree of diffusion of the diffusing units (53) goes on decreasing in a sequential manner from the center of the luminous part toward the periphery thereof.

**13.** The luminaire (5') according to claim 1 or 11, wherein
the luminance of the light source units (52) goes on increasing in a sequential manner from the center of the luminous part toward the periphery thereof, and the space between the light source units (52) goes on increasing in a sequential manner from the center of the luminous part toward the periphery thereof, and
the degree of diffusion of the diffusing units (53') goes on increasing in a sequential manner from the center of the luminous part toward the periphery thereof.

# FIG.1

# FIG.2

(a)

(b)

# FIG.3

(POSITION a)                    (POSITION b)

# FIG.4

# FIG.5

(a)

LUMINANCE

(AVERAGE)

DISTANCE

210

211

(b)

401B    401A    400

411    410

412

130    131

# FIG.6

2

21    20

22

23A    23B

26

25B

25A    24

# FIG.7

HOUSING — 20

2

FIRST LIGHTING UNIT — 27

FIRST DIFFUSING UNIT (DEGREE OF DIFFUSION: HIGH) — 24

REFLECTOR UNIT — 26

FIRST LIGHT SOURCE UNIT (MAXIMUM LUMINANCE: HIGH) — 22

SECOND LIGHTING UNIT — 28

SECOND DIFFUSING UNIT (DEGREE OF DIFFUSION: LOW) — 25

REFLECTOR UNIT — 26

SECOND LIGHT SOURCE UNIT (MAXIMUM LUMINANCE: LOW) — 23

CONTROL UNIT — 21

# FIG.8

# FIG.9

# FIG.10

(a)

0

X2 [cd]

LUMINOUS
INTENSITY

LIGHT DISTRIBUTION
ANGLE 60°

X [cd]

VERTICAL ANGLE
30°

VERTICAL ANGLE
30°

LUMINOUS INTENSITY: HIGH

(b)

LUMINOUS INTENSITY: HIGH

VERTICAL
ANGLE
180°

VERTICAL ANGLE
150°

VERTICAL ANGLE
150°

VERTICAL ANGLE
120°

VERTICAL ANGLE
120°

LUMINOUS
INTENSITY: HIGH

VERTICAL
ANGLE
90°

VERTICAL
ANGLE
90°

LUMINOUS
INTENSITY: HIGH

VERTICAL ANGLE
60°

VERTICAL ANGLE
60°

LUMINOUS
INTENSITY

VERTICAL ANGLE
30°

VERTICAL ANGLE
30°

LUMINOUS
INTENSITY: HIGH

VERTICAL
ANGLE
0°

(c)

LUMINOUS
INTENSITY: HIGH

LUMINOUS
INTENSITY: HIGH

LUMINOUS
INTENSITY: HIGH

0

LUMINOUS
INTENSITY: HIGH

LUMINOUS
INTENSITY

FIG.11

(POSITION a)  (POSITION b)  (POSITION c)

# FIG.12

# FIG.13

# FIG.14

# FIG.15A

# FIG.15B

# FIG.16

# FIG.17A

# FIG.17B

# FIG.18

Europäisches
Patentamt

European
Patent Office

Office européen
des brevets

# EUROPEAN SEARCH REPORT

Application Number

EP 13 18 1814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/125010 A1 (KONINKL PHILIPS ELECTRONICS NV [NL]; TORDINI GIORGIA [FR]) 13 October 2011 (2011-10-13) | 1-4,6, 11-13 | INV. F21V3/00 F21S8/04 F21V9/02 |
| Y | * claims 1, 2, 3, 9, 10, 13 * * page 18, lines 3-25 * * page 22, lines 3-18 * * figures 4A, 4B, 5 * * page 25, line 9 - page 26, line 32 * ----- | 5,7-10 | ADD. F21W131/40 F21W131/402 F21Y113/02 |
| Y | EP 2 242 335 A1 (SHARP KK [JP]) 20 October 2010 (2010-10-20) | 7-10 | |
| A | * claims 1, 2, 4, 5 * * paragraphs [0096], [0112] - [0122] * * figures 14, 15, 18 * ----- | 1-6 | |
| Y | WO 2013/011404 A2 (KONINKL PHILIPS ELECTRONICS NV [NL]; VAN BOVEN JACOBUS DINGENIS MACHIE) 24 January 2013 (2013-01-24) | 5 | |
| A | * page 11, line 28 - page 14, line 17 * ----- | 1-4,6-13 | |
| A | DE 10 2010 034774 A1 (TRILUX GMBH & CO KG [DE]) 23 February 2012 (2012-02-23) * figures 5, 10 * * paragraphs [0050], [0051], [0056] * ----- | 1-13 | TECHNICAL FIELDS SEARCHED (IPC) F21V F21S F21W F21Y |
| A | WO 2008/146232 A1 (KONINKL PHILIPS ELECTRONICS NV [NL]; SCHLANGEN LUCAS J M [NL]; VINKENV) 4 December 2008 (2008-12-04) * claims 1, 2, 7 * * figures 2A, 2B, 3 * * page 13, line 21 - page 14, line 24 * * page 8, line 5 - page 9, line 26 * ----- | 1-13 | |

The present search report has been drawn up for all claims

| Place of search | Date of completion of the search | Examiner |
|---|---|---|
| The Hague | 22 May 2014 | Vida, Gyorgy |

EPO FORM 1503 03.82 (P04C01)

## ANNEX TO THE EUROPEAN SEARCH REPORT
## ON EUROPEAN PATENT APPLICATION NO.

EP 13 18 1814

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2014

| Patent document cited in search report | | Publication date | Patent family member(s) | | Publication date |
|---|---|---|---|---|---|
| WO 2011125010 | A1 | 13-10-2011 | TW | 201213730 A | 01-04-2012 |
| | | | WO | 2011125010 A1 | 13-10-2011 |
| EP 2242335 | A1 | 20-10-2010 | CN | 101884249 A | 10-11-2010 |
| | | | EP | 2242335 A1 | 20-10-2010 |
| | | | JP | 4740934 B2 | 03-08-2011 |
| | | | JP | 2009140826 A | 25-06-2009 |
| | | | US | 2010277105 A1 | 04-11-2010 |
| | | | WO | 2009072430 A1 | 11-06-2009 |
| WO 2013011404 | A2 | 24-01-2013 | CN | 103649631 A | 19-03-2014 |
| | | | EP | 2734784 A2 | 28-05-2014 |
| | | | WO | 2013011404 A2 | 24-01-2013 |
| DE 102010034774 | A1 | 23-02-2012 | NONE | | |
| WO 2008146232 | A1 | 04-12-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009048955 A